# EUROPÄISCHE PATENTANMELDUNG

(11) **EP 3 739 702 A1**
(43) Veröffentlichungstag der Anmeldung: **18.11.2020**
(21) Anmeldenummer: 19174911.8
(22) Anmeldetag: 16.05.2019
(51) Int. Cl.: H02G 1/12

(54) **VERFAHREN ZUM ENTFERNEN EINER ISOLIERUNG VON INNENLEITERN EINES KABELS UND ABISOLIERUNGSVORRICHTUNG**

(71) Anmelder: KOMAX HOLDING AG, 6036 Dierikon (CH)
(72) Erfinder: CALIC, Zoran, 6010 Kriens (CH)
(74) Vertreter: Inventio AG

(57) **Zusammenfassung**

Es wird ein Verfahren zum Entfernen einer Isolierung (38) von Innenleitern (30, 31) eines Kabels (10) mittels einer Abisolierungsvorrichtung (5) vorgeschlagen, wobei das Verfahren folgende Schritte umfasst: Bereitstellen des Kabels (10) mit mehreren Innenleitern (30, 31), wobei in einem ersten Teilbereich (12) des Kabels (10) der Kabelmantel (20) entfernt ist und in einem zweiten Teilbereich (14) des Kabels (10) der Kabelmantel (20) nicht entfernt ist; Einführen des ersten Teilbereichs (12) des Kabels (10) zwischen eine erste drehbare Walze (60) und eine zweite drehbare Walze (62) der Abisolierungsvorrichtung (5); Bewegen der ersten Walze (60) und/oder der zweiten Walze (62) derart, dass sich die erste Walze (60) und die zweite Walze (62) zum Einklemmen des ersten Teilbereichs (12) des Kabels (10) zwischen den Walzen (60, 62) aufeinander zu bewegen; Bewegen des Kabels (10) in eine erste Richtung derart, dass sich der zweite Teilbereich (14) des Kabels (10) von den Walzen (60, 62) entfernt, während der erste Teilbereich (12) zwischen den Walzen (60, 62) eingeklemmt ist; Bewegen des Kabels (10) in eine zweite Richtung derart, dass der zweite Teilbereich (14) des Kabels (10) den Walzen (60, 62) angenähert wird, wobei die erste Richtung entgegensetzt zur zweiten Richtung verläuft, während der erste Teilbereich (12) zwischen den Walzen (60, 62) eingeklemmt ist; Bewegen von Abisoliermessern (42, 44) auf den ersten Teilbereich (12) des Kabels (10) derart zu, dass die Abisoliermesser (42, 44) in die Isolierung (38) der Innenleiter (30, 31) einschneiden; und Bewegen des Kabels (10) in die erste Richtung zum Entfernen zumindest eines Teils der Isolierung (38) von den Innenleitern (30, 31).

## Beschreibung

Die vorliegende Erfindung betrifft ein Verfahren zum Entfernen einer Isolierung von Innenleitern eines Kabels und eine Abisolierungsvorrichtung.

Mehradrige Kabel oder Mantelkabel verfügen über mehrere einzeln isolierte Innenleiter, die von einem Mantel umgeben sind. Der Mantel verfügt mindestens über eine äußere Isolierungsschicht und kann zusätzliche Schichten, wie Schirmgewebe oder Folien enthalten. Die einzelnen Innenleiter bestehen aus verdrillten Litzen (üblicherweise aus Kupfer oder Aluminium), die von einer Isolierung (z.B. Kunststoffisolierung) umgeben sind. Die Innenleiter können ebenfalls verdrillt sein.

Um die automatische Verarbeitung von mehradrigen Kabeln zu ermöglichen, in es zweckmäßig, die Innenleiter nach dem Abziehen des Kabelmantels so auszurichten, dass sie nebeneinander in einer Reihe liegen. Damit ist die Voraussetzung gegeben, um die Innenleiter mit einem speziellen Messerpaar abisolieren zu können.

Nachteilig an bisher bekannten Verfahren bzw. bisher bekannten Abisolierungsvorrichtungen ist, dass Probleme auftreten können, wenn die Innenleiter nebeneinander in einer Reihe ausgerichtet werden sollen, jedoch die Innenleiter nicht verdrillt sind oder in die gleiche Richtung verdrillt sind, in die eine Bewegung zum Entdrillen durch die Abisolierungsvorrichtung stattfindet. Zudem ist bei Abisolierungsvorrichtungen gemäß des Stands der Technik nachteilig, dass beim Ausrichten der Innenleiter die Isolierung deformiert werden kann und/oder die Innenleiter deformiert werden können.

Es kann unter anderem ein Bedarf an einem Verfahren bzw. einer Abisolierungsvorrichtung bestehen, mittels dem bzw. der die Isolierung von Innenleitern eines mehradrigen Kabels technisch einfach und zuverlässig entfernt werden kann.

Einem solchen Bedarf kann durch ein Verfahren zum Entfernen einer Isolierung von Innenleitern eines Kabels bzw. eine Abisolierungsvorrichtung gemäß den unabhängigen Ansprüchen entsprochen werden. Vorteilhafte Ausführungsformen sind in den abhängigen Ansprüchen definiert.

Gemäß einem ersten Aspekt der Erfindung wird ein Verfahren zum Entfernen einer Isolierung von Innenleitern eines Kabels mittels einer Abisolierungsvorrichtung vorgeschlagen, wobei das Verfahren folgende Schritte umfasst: Bereitstellen des Kabels mit mehreren Innenleitern, wobei in einem ersten Teilbereich des Kabels der Kabelmantel entfernt ist und in einem zweiten Teilbereich des Kabels der Kabelmantel nicht entfernt ist; Einführen des ersten Teilbereichs des Kabels zwischen eine erste drehbare Walze und eine zweite drehbare Walze der Abisolierungsvorrichtung; Bewegen der ersten Walze und/oder der zweiten Walze derart, dass sich die erste Walze und die zweite Walze zum Einklemmen des ersten Teilbereichs des Kabels zwischen den Walzen aufeinander zu bewegen; Bewegen des Kabels in eine erste Richtung derart, dass sich der zweite Teilbereich des Kabels von den Walzen entfernt, während der erste Teilbereich zwischen den Walzen eingeklemmt ist; Bewegen des Kabels in eine zweite Richtung derart, dass der zweite Teilbereich des Kabels den Walzen angenähert wird, wobei die erste Richtung entgegensetzt zur zweiten Richtung verläuft, während der erste Teilbereich zwischen den Walzen eingeklemmt ist; Bewegen von Abisoliermessern auf den ersten Teilbereich des Kabels derart zu, dass die Abisoliermesser in die Isolierung der Innenleiter einschneiden; und Bewegen des Kabels in die erste Richtung zum Entfernen zumindest eines Teils der Isolierung von den Innenleitern. Die Schritte des Verfahrens können insbesondere in der angegebenen Reihenfolge ausgeführt werden.

Vorteilhaft hieran ist, dass auf diese Weise die Innenleiter eines mehradrigen Kabels technisch einfach abisoliert werden können. Dies bedeutet, dass die Isolierung der Innenleiter technisch einfach entfernt werden kann. Insbesondere wird sicher verhindert, dass sich die Isolierung oder die Innenleiter beim Ausrichten der Innenleiter in einer Ebene verformen können, auch wenn die Innenleiter des Kabels nicht verdrillt sind. Darüber hinaus können hierdurch auch Innenleiter von Kabeln abisoliert werden, bei denen nur in einem kleinen Teilbereich des Kabels der Kabelmantel des Kabels entfernt ist.

Gemäß einem zweiten Aspekt der Erfindung wird eine Abisolierungsvorrichtung zum Entfernen einer Isolierung von Innenleitern eines Kabels vorgeschlagen, wobei in einem ersten Teilbereich des Kabels der Kabelmantel des Kabels entfernt ist und in einem zweiten Teilbereich des Kabels der Kabelmantel des Kabels nicht entfernt ist, wobei die Abisolierungsvorrichtung folgendes umfasst: eine erste drehbare Walze und eine zweite drehbare Walze, wobei die Walzen zum Einklemmen des ersten Teilbereichs des Kabels zwischen der ersten Walze und der zweiten Walze ausgebildet sind, eine Bewegungsvorrichtung zum Bewegen des Kabels in eine erste Richtung und in eine der ersten Richtung entgegengesetzte zweite Richtung, während der erste Teilbereich zwischen den Walzen eingeklemmt ist, wobei bei der Bewegung des Kabels in die erste Richtung sich der zweite Teilbereich des Kabels von den Walzen entfernt und bei der Bewegung des Kabels in die zweite Richtung der zweite Teilbereich des Kabels den Walzen angenähert wird, und Abisoliermesser zum Entfernen der Isolierung der Innenleiter des Kabels, wobei die Abisoliermesser derart ausgebildet und anordenbar sind, dass die Abisoliermesser in die Isolierung der Innenleiter einschneiden und die Isolierung beim Bewegen des Kabels in die erste Richtung von den Innenleitern entfernt wird.

Ein Vorteil hiervon ist, dass mittels der Abisolierungsvorrichtung ein mehradriges Kabel, d.h. ein Kabel mit mehreren Innenleitern, technisch einfach und zuverlässig abisoliert werden kann. Dies bedeutet, dass die Isolierung der Innenleiter technisch einfach entfernt werden kann. Zudem wird bei der Abisolierungsvorrichtung zuverlässig verhindert, dass, auch wenn die Innenleiter nicht verdrillt sind, beim Ausrichten der Innenleiter in einer Ebene die Isolierung und/oder die Innenleiter deformiert werden. Darüber hinaus kann mit der Abisolierungsvorrichtung die Isolierung von Innenleitern entfernt werden, auch wenn der Teilbereich, in dem der Kabelmantel von dem Kabel entfernt ist, besonders kurz bzw. klein ist. Zudem ist die Abisolierungsvorrichtung kostengünstig ausgebildet.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäß einer Ausführungsform des Verfahrens wird der Druck der Walzen auf den ersten Teilbereich des Kabels erhöht, nachdem das Kabel in die erste Richtung bewegt wurde und bevor das Kabel in die zweite Richtung bewegt wird. Vorteilhaft hieran ist, dass die Ausrichtung der Innenleiter nebeneinander in einer Reihe bzw. in einer Ebene noch zuverlässiger bzw. schneller erreicht wird. Insbesondere wenn die Innenleiter besonders stark miteinander verdrillt sind, kann hierdurch die Ausrichtung der Innenleiter nebeneinander in einer Reihe bzw. Ebene besonders zuverlässig erreicht werden.

Gemäß einer Ausführungsform des Verfahrens sind die Abisoliermesser und Trennmesser zum Abtrennen des Kabels Teile eines Messerkopfes, wobei das Verfahren ferner folgenden Schritt umfasst: Verfahren des Messerkopfes in eine Richtung senkrecht zu der ersten Richtung zum Anordnen des ersten Teilbereichs des Kabels zwischen den Abisoliermessern. Vorteilhaft hieran ist, dass die Abisoliermesser und die Trennmesser unabhängig voneinander verwendet werden können. Dies erhöht die Variabilität des Verfahrens.

Gemäß einer Ausführungsform des Verfahrens werden während des Einklemmens des ersten Teilbereichs des Kabels zwischen den Walzen die Walzen jeweils nur entlang einer Bewegungsrichtung bewegt, wobei die beiden Bewegungsrichtungen der Walzen genau entgegengesetzt zueinander sind. Vorteilhaft hieran ist, dass die Walzen keine Querbewegung zueinander bzw. zueinander versetzte Bewegung ausführen, sondern nur eine lineare Bewegung in zwei zueinander entgegengesetzte Richtungen, sozusagen aufeinander zu bzw. voneinander weg. Hierdurch wird sichergestellt, dass die Innenleiter, auch wenn sie nicht verdrillt sind, sicher in einer Reihe nebeneinander bzw. einer Ebene ausgerichtet werden. Insbesondere wird eine Deformierung der Isolierung der Innenleiter bzw. der Innenleiter hierdurch sicher verhindert.

Gemäß einer Ausführungsform des Verfahrens hängt der Druck der Walzen auf den ersten Teilbereich des Kabels während des Einklemmens von dem Abstand der beiden Walzen zueinander ab. Ein Vorteil hiervon ist, dass das Verfahren mit einer technisch besonders einfachen Abisolierungsvorrichtung durchgeführt werden kann. Zudem ist das Verfahren besonders zuverlässig.

Gemäß einer Ausführungsform des Verfahrens wird der Druck, mit dem die Walzen den ersten Teilbereich einklemmen, unabhängig von dem Abstand der Walzen, insbesondere pneumatisch, eingestellt. Vorteilhaft hieran ist, dass die Innenleiter besonders zuverlässig in eine Ebene bewegt bzw. gebracht werden. Zudem kann die Isolierung der Innenleiter noch präziser von den Innenleitern entfernt werden.

Gemäß einer Ausführungsform des Verfahrens wird das Kabel mehrmals abwechselnd in die erste Richtung und die zweite Richtung bewegt, während der erste Teilbereich zwischen den Walzen eingeklemmt ist. Ein Vorteil hiervon ist, dass technisch einfach und besonders zuverlässig sichergestellt wird, dass die Innenleiter des Kabels in einer Ebene angeordnet werden, bevor die Isolierung der Innenleiter entfernt wird.

Gemäß einer Ausführungsform des Verfahrens wird das Kabel solange abwechselnd in die erste Richtung und die zweite Richtung bewegt, bis die Innenleiter des Kabels in einer Ebene angeordnet sind. Vorteilhaft hieran ist, dass sichergestellt ist, dass vor dem Einschneiden der Isolierung die Innenleiter tatsächlich in einer Ebene angeordnet sind. Somit ist das Entfernen der Isolierung besonders sichergestellt.

Gemäß einer Ausführungsform der Abisolierungsvorrichtung umfasst die Abisolierungsvorrichtung ferner einen Messerkopf, wobei der Messerkopf die Abisoliermesser und Trennmesser aufweist, wobei der Messerkopf in eine Richtung senkrecht zu der ersten Richtung derart verfahrbar ist, dass der erste Teilbereich des Kabels zwischen die Abisoliermesser gelangt. Ein Vorteil hiervon ist, dass bei der Abisolierungsvorrichtung die Abisoliermesser und die Trennmesser unabhängig voneinander verwendet werden können. Dies erhöht die Variabilität der Abisolierungsvorrichtung.

Gemäß einer Ausführungsform der Abisolierungsvorrichtung ist die Abisolierungsvorrichtung derart ausgebildet, dass während des Einklemmens des ersten Teilbereichs des Kabels zwischen den Walzen die Walzen jeweils nur entlang einer Bewegungsrichtung bewegbar sind, wobei die beiden Bewegungsrichtungen der Walzen genau entgegengesetzt zueinander sind. Ein Vorteil hiervon ist, dass bei der Abisolierungsvorrichtung die Walzen keine Querbewegung, d.h. eine Bewegung versetzt zueinander ausführen können, sondern die Walzen sich lediglich aufeinander zu und voneinander weg entlang einer Bewegungsrichtung bewegen können. Somit ist sichergestellt, dass auch bei einem Kabel mit Innenleitern, die nicht miteinander verdrillt sind, die Innenleiter in einer Ebene ausgerichtet werden können, ohne dass Deformierungen der Innenleiter und/oder der Isolierung auftreten.

Gemäß einer Ausführungsform der Abisolierungsvorrichtung ist die Abisolierungsvorrichtung derart ausgebildet, dass der Druck der Walzen auf den ersten Teilbereich des Kabels erhöht werden kann, während der erste Teilbereich des Kabels zwischen den Walzen eingeklemmt ist, wobei der Druck, mit dem die Walzen den ersten Teilbereich einklemmen, abhängig von dem Abstand der Walzen ist. Vorteilhaft hieran ist, dass die Abisolierungsvorrichtung technisch besonders einfach und kostengünstig ausgebildet sein kann.

Gemäß einer Ausführungsform der Abisolierungsvorrichtung ist die Abisolierungsvorrichtung derart ausgebildet, dass der Druck der Walzen auf den ersten Teilbereich des Kabels, insbesondere pneumatisch, erhöht werden kann, während der erste Teilbereich des Kabels zwischen den Walzen eingeklemmt ist, ohne den Abstand der Walzen zueinander wesentlich zu ändern. Ein Vorteil hiervon ist, dass die Abisolierungsvorrichtung die Innenleiter besonders zuverlässig in einer Ebene ausrichten kann. Darüber hinaus kann mittels der Abisolierungsvorrichtung die Isolierung der Innenleiter noch zuverlässiger entfernt werden.

Gemäß einer Ausführungsform der Abisolierungsvorrichtung ist die Abisolierungsvorrichtung derart ausgebildet, dass das Kabel mehrmals abwechselnd in die erste Richtung und die zweite Richtung bewegbar ist, während der erste Teilbereich zwischen den Walzen eingeklemmt ist. Vorteilhaft hieran ist, dass mittels der Abisolierungsvorrichtung die Innenleiter des Kabels zuverlässig und technisch einfach nebeneinander bzw. in einer Ebene angeordnet werden können, bevor die Isolierung der Innenleiter entfernt wird.

Gemäß einer Ausführungsform der Abisolierungsvorrichtung ist die Abisolierungsvorrichtung derartig ausgebildet, dass das Kabel solange abwechselnd in die erste Richtung und die zweite Richtung bewegbar ist, bis die Innenleiter des Kabels in einer Ebene angeordnet sind. Vorteilhaft hieran ist, dass die Abisolierungsvorrichtung die Bewegung des Kabels in die erste Richtung bzw. zweite Richtung erst dann beendet, wenn die Innenleiter tatsächlich in einer Ebene ausgerichtet bzw. angeordnet sind. Somit wird sichergestellt, dass das nachfolgende Einschneiden der Isolierung und die Entfernung der Isolierung von den Innenleitern mit Erfolg präzise durchgeführt werden kann.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht einer Ausführungsform der erfindungsgemäßen Abisolierungsvorrichtung;
- Fig. 2 zeigt: eine perspektivische Ansicht eines Kabels mit mehreren Innenleitern, bei dem in einem ersten Teilbereich der Kabelmantel entfernt ist;
- Fig. 3 zeigt: eine Frontalansicht auf den Messerblock der Abisolierungsvorrichtung aus Fig. 1;
- Fig. 4 zeigt: eine Seitenansicht der Abisolierungsvorrichtung aus Fig. 1 bei dem ersten Verfahrensschritt;
- Fig. 5 zeigt: eine perspektivische Ansicht der Abisolierungsvorrichtung aus Fig. 1 bei dem ersten Verfahrensschritt;
- Fig. 6 zeigt: eine Seitenansicht der Abisolierungsvorrichtung aus Fig. 1 bei dem zweiten Verfahrensschritt;
- Fig. 7 zeigt: eine Seitenansicht der Abisolierungsvorrichtung aus Fig. 1 bei dem dritten Verfahrensschritt;
- Fig. 8 zeigt: eine Seitenansicht der Abisolierungsvorrichtung aus Fig. 1 bei dem vierten Verfahrensschritt;
- Fig. 9 zeigt: eine Seitenansicht der Abisolierungsvorrichtung aus Fig. 1 bei dem fünften Verfahrensschritt; und
- Fig. 10 zeigt: eine perspektivische Ansicht der Abisolierungsvorrichtung aus Fig. 1 bei dem fünften Verfahrensschritt.

Die Figuren sind lediglich schematisch und nicht maßstabsgetreu. Gleiche Bezugszeichen bezeichnen in den verschiedenen Figuren gleiche oder gleichwirkende Merkmale

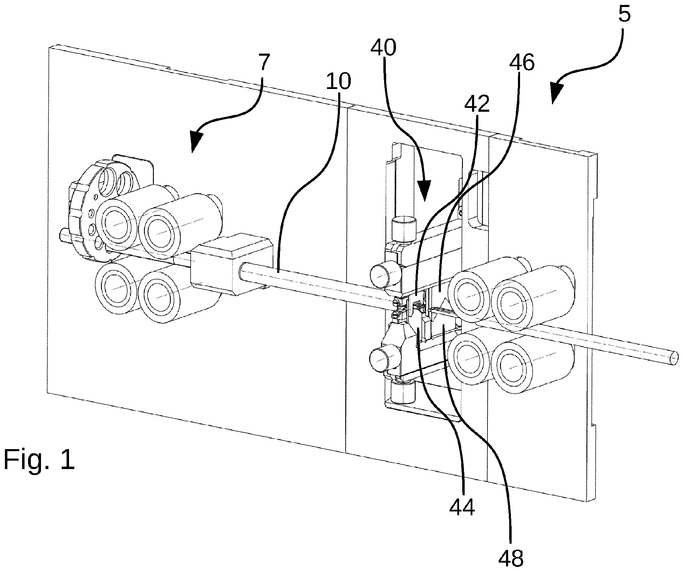

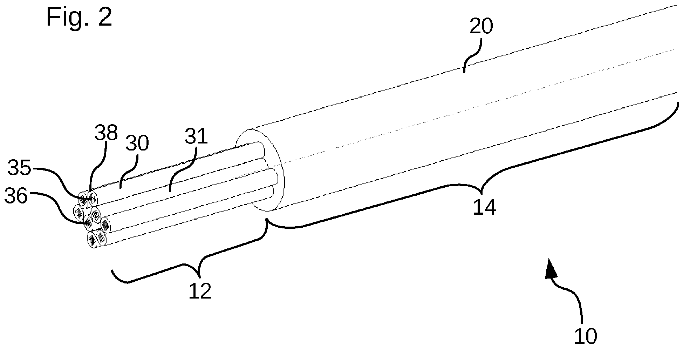

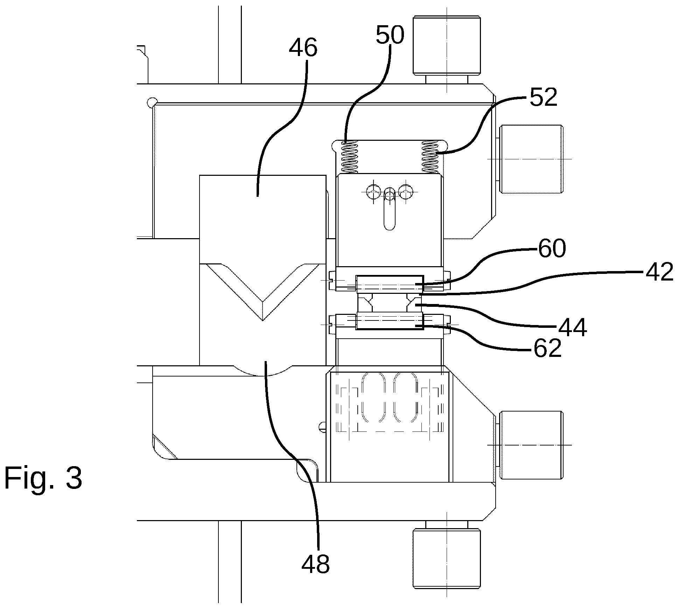

Fig. 1 zeigt eine perspektivische Ansicht einer Ausführungsform der erfindungsgemäßen Abisolierungsvorrichtung 5. Fig. 2 zeigt eine perspektivische Ansicht eines Kabels 10 mit mehreren Innenleitern 30, 31, bei dem in einem ersten Teilbereich 12 der Kabelmantel 20 entfernt ist. Fig. 3 zeigt eine Frontalansicht auf den Messerblock der Abisolierungsvorrichtung 5 aus Fig. 1.

In Fig. 3 wird sozusagen von der linken Seite der Fig. 1 auf den Messerblock geschaut.

Die Abisoliervorrichtung ist zum Entfernen der Isolierung 38 von mehreren Innenleitern 30, 31 eines Kabels 10 ausgebildet. Das Kabel 10 umfasst üblicherweise einen Kabelmantel 20. Der Kabelmantel 20 verfügt typischerweise über eine oder mehrere äußere Isolierungsschichten. Der Kabelmantel 20 kann zusätzliche Schichten, wie Schirmgewebe oder Folien, enthalten.

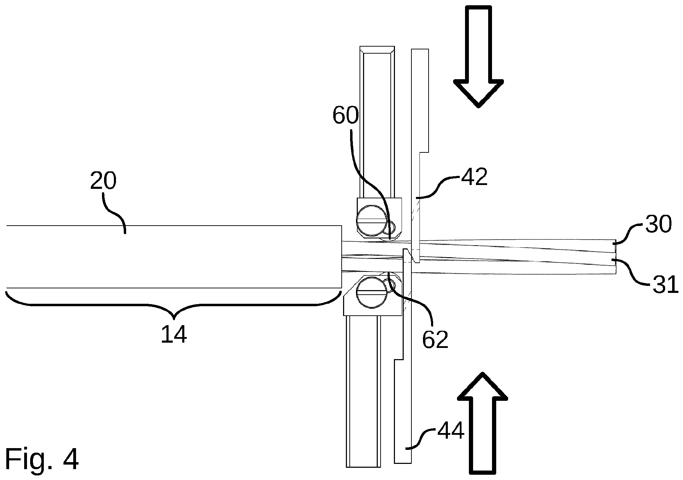

Das Kabel 10 weist mehrere Innenleiter 30, 31 bzw. Adern auf. Dies bedeutet, dass das Kabel 10 ein mehradriges Kabel 10 ist. Die Innenleiter 30, 31 können miteinander verdrillt sein, wie dies in Fig. 4 dargestellt ist. Es ist jedoch auch möglich, dass die Innenleiter 30, 31 bzw. Adern des Kabels 10 parallel zueinander verlaufen, wie dies in Fig. 2 dargestellt ist. Dies bedeutet, dass es möglich ist, dass die Innenleiter 30, 31 nicht miteinander verdrillt sind.

Die Innenleiter 30, 31 können wiederum mehrere Litzen 35, 36 aufweisen. Die mehreren Litzen 35, 36 können miteinander verdrillt sein. Es ist auch denkbar, dass die Litzen 35, 36 nicht miteinander verdrillt sind.

Bei dem Kabel 10 wurde in einem ersten Teilbereich 12 des Kabels 10 der Kabelmantel 20 entfernt, so dass die Innenleiter 30, 31, die jeweils eine Isolierung 38 aufweisen, freiliegen. In Fig. 2 befindet sich der erste Teilbereich 12 des Kabels 10 links. In einem zweiten Teilbereich 14 des Kabels 10 ist der Kabelmantel 20 noch vorhanden. In Fig. 2 befindet sich der zweite Teilbereich 14 des Kabels 10 rechts.

Der Kabelmantel 20 kann in dem ersten Teilbereich 12 des Kabels 10 mittels der Abisoliervorrichtung entfernt worden sein. Möglich ist auch, dass der Kabelmantel 20 manuell oder mit einer anderen Vorrichtung in dem ersten Teilbereich 12 des Kabels 10 entfernt wurde.

Die Abisoliervorrichtung weist einen Messerblock auf, der ein oberes Trennmesser 46, ein unteres Trennmesser 48, ein oberes Abisoliermesser 42 und ein unteres Abisoliermesser 44 aufweist. Die zwei Abisoliermesser 42, 44 weisen jeweils äußere Vorsprünge auf, so dass beim Schließen der Abisoliermesser 42, 44 ein in einer Ebene senkrecht zu der Längsachse des Kabels 10 verlaufendes Rechteck gebildet wird. Die Längsachse des Kabels 10 verläuft in Fig. 3 in die Zeichenebene hinein bzw. heraus. Das Kabel 10 verläuft durch dieses Rechteck, wenn die Abisoliermesser 42, 44 verwendet werden.

Die Trennmesser 46, 48 sind jeweils V-förmig ausgebildet, so dass beim Schließen der Trennmesser 46, 48 eine von Teilen der Trennmesser 46, 48 gebildete in einer Ebene senkrecht zu der Längsachse des Kabels 10 verlaufende Öffnung entsteht. Das Kabel 10 verläuft durch diese Öffnungen, wenn die Trennmesser 46, 48 verwendet werden.

Die Trennmesser 46, 48 sind zum Durchtrennen bzw. Durchschneiden des Kabels 10 bzw. der Innenleiter 30, 31 ausgebildet. Es wäre aber auch denkbar, mit den Trennmessern 46, 48 den Kabelmantel 20 anzuschneiden und die Trennmesser zum Entfernen des Mantels zu verwenden.

Die Abisoliermesser 42, 44 weisen jeweils mehrere Vorsprünge und Aussparungen auf. Dies bedeutet, dass die Abisoliermesser 42, 44 jeweils auf ihrer dem Kabel 10 zugewandten Schneidkante eine Zick-Zack-Form aufweisen. Die Vorsprünge und Aussparungen des oberen Abisoliermesser 42, 44 können komplementär zu den Vorsprüngen und Aussparungen des unteren Abisoliermessers 42, 44 ausgebildet sein. Die Anzahl der Vorsprünge bzw. Aussparungen kann der (maximalen) Anzahl der Innenleiter 30, 31 entsprechen, so dass für jeden Innenleiter 30, 31 eine Kerbe bzw. Aussparung des zweiten Abisoliermessers 42, 44 vorhanden ist. Die Abisoliermesser 42, 44 dienen zum Aufschneiden bzw. Anschneiden der Isolierung 38 der Innenleiter 30, 31.

Der Messerkopf 40 kann in einer Ebene, die sich senkrecht zur Längsrichtung des Kabels 10 erstreckt, verschoben werden (in Fig. 3 nach links bzw. nach rechts). Dies bedeutet, dass der Messerkopf 40 in eine derartige Position gebracht werden kann, dass beim Schließen des Messerkopfes 40 die Trennmesser 46, 48 das Kabel 10 durchtrennen oder dass beim Schließen des Messerkopfes 40 die Abisoliermesser 42, 44 in die Isolierung 38 der Innenleiter 30, 31 einschneiden. Somit befindet sich das Kabel 10 entweder zwischen den Abisoliermessern 42, 44 oder zwischen den Trennmessern 46, 48.

In den Zeichnungen ist der Messerkopf 40 stets so angeordnet, dass das Kabel 10 zwischen den Abisoliermesser 42, 44 angeordnet ist.

Die Abisolierungsvorrichtung 5 weist eine erste Walze 60 bzw. obere Walze und eine zweite Walze 62 bzw. untere Walze auf. Die Walzen 60, 62 können als Rollen ausgebildet sein. Die Walzen 60, 62 können sich jeweils um ihre horizontal verlaufende Achse drehen. Die Walzen 60, 62 sind in Fig. 3 weiter rechts angeordnet als die Abisoliermesser 42, 44. Durch die Schließbewegung des Messerkopfes 40 werden die Walzen 60, 62 aufeinander zu bewegt. Dies bedeutet, dass beim Schließen des Messerkopfes 40 bzw. Aufeinanderzubewegen des oberen Teils und des unteren Teils des Messerkopfes 40 die Walzen 60, 62 ebenfalls aufeinander zu bewegt werden. Die Walzen 60, 62 sind durch mehrere Druckfedern 50, 52 beaufschlagt. Die Druckfedern 50, 52 erzeugen die Klemmkraft auf den ersten Teilbereich 12 des Kabels 10, wenn das Kabel 10 zwischen den Walzen 60, 62 eingeklemmt ist, wobei die Klemmkraft von dem Abstand der beiden Walzen 60, 62 zueinander abhängig ist. Je weiter die Abisoliermesser 42, 44 geschlossen sind, desto stärker drücken die Walzen 60, 62 auf den ersten Teilbereich 12 des Kabels 10.

Denkbar ist auch, dass die Walzen 60, 62 eine von den Abisoliermesser 42, 44 unabhängige Schließvorrichtung aufweisen. Die Schließvorrichtung kann beispielsweise einen Pneumatikzylinder aufweisen. Hierdurch kann die Klemmkraft der Walzen 60, 62 auf den ersten Teilbereich 12 des Kabels 10 unabhängig vom Abstand der Walzen 60, 62 verändert werden.

Die Walzen 60, 62 können sich (neben der möglichen Rotation) im Wesentlichen nur nach oben (voneinander weg) und unten (aufeinander zu) bewegen. Eine seitliche Bewegung der Walzen 60, 62 ist nicht vorhergesehen.

Nachfolgend wird der Ablauf des Verfahrens zum Entfernen der Isolierung 38 bzw. Isolation von Innenleitern 30, 31 bzw. Adern des Kabels 10 erläutert.

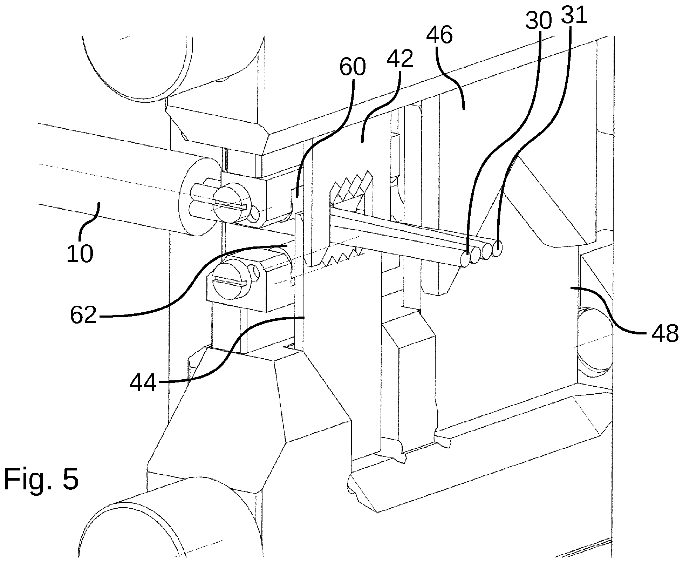

Fig. 4 zeigt eine Seitenansicht der Abisolierungsvorrichtung 5 aus Fig. 1 bei dem ersten Verfahrensschritt. Fig. 5 zeigt eine perspektivische Ansicht der Abisolierungsvorrichtung 5 aus Fig. 1 bei dem ersten Verfahrensschritt.

Zunächst wird ein Kabel 10 mit mehreren Innenleitern 30, 31 bereitgestellt, wobei bei dem Kabel 10 in einem ersten Teilbereich 12 bereits der Kabelmantel 20 entfernt wurde (vgl. Fig. 2). Die Innenleiter 30, 31 können miteinander verdrillt sein (vgl. Fig. 3) oder, wie in Fig. 2 gezeigt, nicht miteinander verdrillt sein. In einem zweiten Teilbereich 14 ist der Kabelmantel 20 noch an dem Kabel 10 vorhanden.

Das Kabel 10 wird mit seinem ersten Teilbereich 12 zwischen die Abisoliermesser 42, 44 geführt. Anschließend wird der Messerkopf 40 so weit geschlossen, dass der erste Teilbereich 12 bzw. ein Abschnitt des ersten Teilbereichs 12 des Kabels 10 zwischen den beiden Walzen 60, 62 eingeklemmt ist. Die Walzen 60, 62 drücken nun in zueinander entgegengesetzte Richtungen auf die Innenleiter 30, 31 des Kabels 10. Dieses Drücken ist bzw. die Kräfte sind in Fig. 4 durch zwei Pfeile dargestellt.

In Fig. 4 ist das Kabel 10 so tief zwischen die Walzen 60, 62 geführt, dass der Kabelmantel 20 des zweiten Teilbereichs 14 fast den Messerblock berührt.

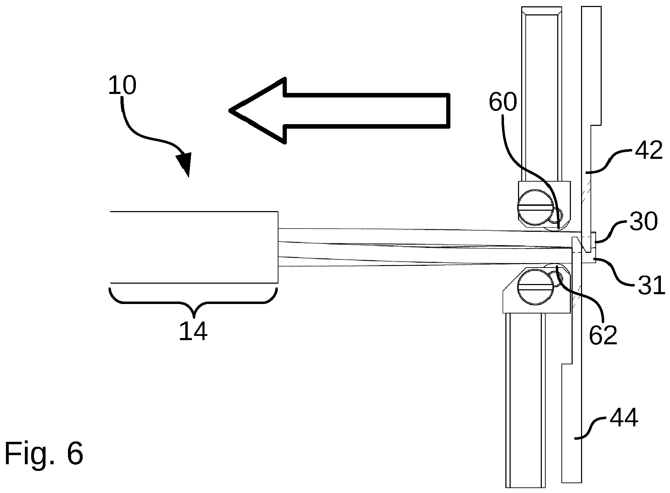

Fig. 6 zeigt eine Seitenansicht der Abisolierungsvorrichtung 5 aus Fig. 1 bei bzw. nach dem zweiten Verfahrensschritt. Nach dem Einklemmen eines Bereichs des ersten Teilbereichs 12 des Kabels 10 zwischen den Walzen 60, 62, wird das nun Kabel 10 mittels einer Bewegungsvorrichtung 7 (z.B. mehreren Rollen) entlang seiner Längsachse (die Längsachse verläuft in Fig. 6 von links nach rechts bzw. rechts nach links) in eine erste Richtung bewegt, so dass der zweite Teilbereich 14 des Kabels 10, in dem der Kabelmantel 20 vorhanden ist, von den Abisoliermessern 42, 44 bzw. den Walzen 60, 62 entfernt wird. Diese Bewegung ist in Fig. 6 mit einem Pfeil dargestellt.

Das Kabel 10 wird sozusagen in Fig. 6 nach links bewegt, während die Walzen 60, 62 die Innenleiter 30, 31 eingeklemmt halten bzw. weiterhin auf die Innenleiter 30, 31 drücken. Dies ist eine streifende Relativbewegung. Während der Bewegung nach links in Fig. 6 drehen sich die Walzen 60, 62 entsprechend um ihre jeweilige Drehachse.

Durch das Zusammendrücken bzw. Einklemmen der Innenleiter 30, 31 zwischen den Walzen 60, 62 und der gleichzeitigen Bewegung nach links in Fig. 6 nähern sich die Innenleiter 30, 31 einer Anordnung bzw. Ausrichtung, bei der die Innenleiter 30, 31 nebeneinander in einer Ebene liegen. Wenn die Innenleiter 30, 31 miteinander verdrillt sind, werden sie hierdurch (zumindest teilweise) entdrillt.

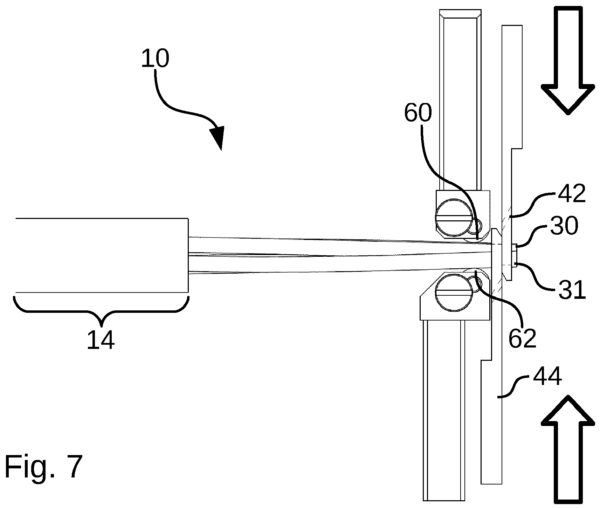

Fig. 7 zeigt eine Seitenansicht der Abisolierungsvorrichtung 5 aus Fig. 1 bei dem dritten Verfahrensschritt. Nachdem das Kabel 10 in die erste Richtung bewegt wurde, wird der Druck der Walzen 60, 62 auf den ersten Teilbereich 12 bzw. einen Abschnitt des ersten Teilbereichs 12 des Kabels 10 erhöht. Dies ist in Fig. 7 durch zwei Pfeile gezeigt. Dieses Erhöhen des Drucks der Walzen 60, 62 auf den Teilabschnitt des ersten Teilbereichs 12 des Kabels 10 ist optional und muss nicht durchgeführt werden.

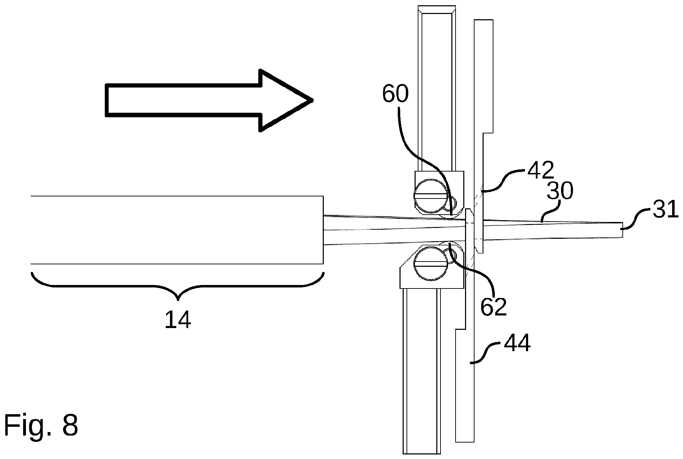

Fig. 8 zeigt eine Seitenansicht der Abisolierungsvorrichtung 5 aus Fig. 1 bei dem vierten Verfahrensschritt. Nun wird das Kabel 10 in die zweite Richtung, die entgegengesetzt zu der ersten Richtung ist, bewegt. Dies bedeutet, dass der zweite Teilbereich 14 des Kabels 10 auf die Abisoliermesser 42, 44 bzw. die Walzen 60, 62 zu bewegt wird. Diese Bewegungsrichtung des Kabels 10 ist in Fig. 8 durch einen Pfeil gezeigt. In Fig. 8 wird das Kabel 10 nach rechts bewegt. Während dieser Bewegung drehen sich die Walzen 60, 62 um ihre jeweilige Drehachse. Hierdurch wird ein Knicken und/oder Verbiegen der Innenleiter 30, 31 und/oder der Isolierung 38 verhindert. Die Walzen 60, 62 halten weiterhin den ersten Teilbereich 12 des Kabels 10 zwischen den Walzen 60, 62 eingeklemmt bzw. drücken in zueinander entgegengesetzte Richtungen auf den ersten Teilbereich 12 des Kabels 10.

Der zweite Verfahrensschritt und der vierte Verfahrensschritt (sowie zwischen dem zweiten Verfahrensschritt und dem vierten Verfahrensschritt gegebenenfalls der dritte Verfahrensschritt) können abwechselnd wiederholt werden, insbesondere mehrfach wiederholt werden. Dies bedeutet, dass das Kabel 10 abwechselnd mehrfach in die erste Richtung und die zweite Richtung bewegt wird, während das Kabel 10 zwischen den Walzen 60, 62 eingeklemmt ist bzw. bleibt. Es ist denkbar, dass der Druck der Walzen 60, 62 auf den ersten Teilbereich 12 bei jeder Umkehrung der Bewegungsrichtung des Kabels 10 (von erster Richtung in die zweite Richtung und/oder von der zweiten Richtung in die erste Richtung) vergrößert wird.

Nun befinden sich die Innenleiter 30, 31 nebeneinander in einer Reihe bzw. einer Ebene. Dies bedeutet u.a., dass die Innenleiter 30, 31 soweit sie miteinander verdrillt waren, entdrillt sind.

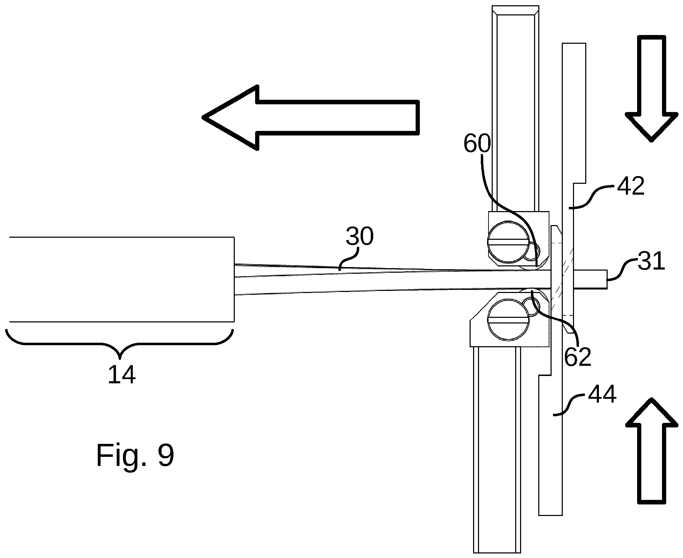

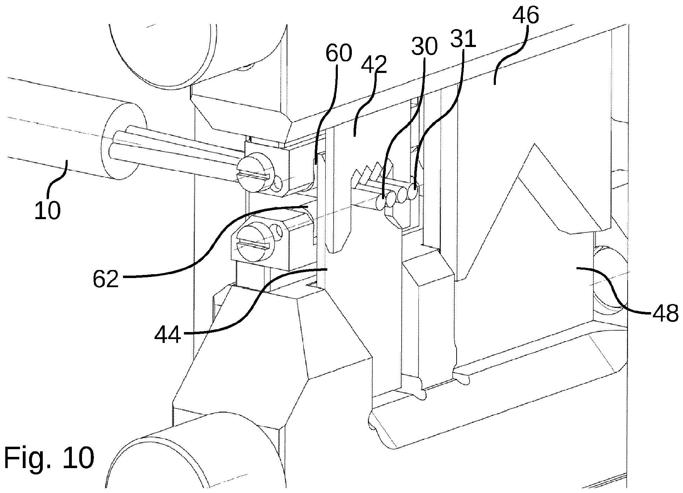

Fig. 9 zeigt eine Seitenansicht der Abisolierungsvorrichtung 5 aus Fig. 1 bei dem fünften Verfahrensschritt. Fig. 10 zeigt eine perspektivische Ansicht der Abisolierungsvorrichtung 5 aus Fig. 1 bei dem fünften Verfahrensschritt.

Schließlich wird der Messerkopf 40 bzw. die Abisoliermesser 42, 44 weiter geschlossen als vorher, so dass die Abisoliermesser 42, 44 oben und unten die Isolierung 38 der Innenleiter 30, 31 jeweils einschneiden. Dies ist in Fig. 9 durch Pfeile angedeutet.

Nachdem die Abisoliermesser 42, 44 in die Isolierung 38 eingeschnitten haben, wird das Kabel 10 in die erste Richtung, d.h. in Fig. 9 nach links, bewegt. Hierdurch wird die Isolierung 38 der Innenleiter 30, 31 von den Innenleitern 30, 31 entfernt bzw. abgezogen. Die Isolierung 38 bleibt sozusagen an den Abisoliermessern 42, 44 hängen. Die Entfernung der Isolierung 38 bzw. Isolierung von mehreren Innenleitern 30, 31, insbesondere allen Innenleitern 30, 31 des Kabels 10, wird gleichzeitig durchgeführt. Wie in Fig. 10 gut erkennbar ist, liegen die Innenleiter 30, 31 während des Einschneidens in die Isolierung 38 bzw. während der Entfernung der Isolierung 38 in einer Ebene nebeneinander.

Der Druck der Walzen 60, 62 auf die Innenleiter 30, 31 des Kabels 10 kann pneumatisch eingestellt bzw. verändert werden. Dies bedeutet, dass unabhängig von dem Abstand der Walzen 60, 62 zueinander der Druck auf die Innenleiter 30, 31 des Kabels 10 verändert werden kann.

Die beschriebenen Bewegungen des Kabels 10 bzw. der Innenleiter 30, 31 sind stets relativ zu dem Messerblock zu verstehen. Dies bedeutet, dass es auch möglich ist, dass das Kabel 10 nicht bewegt wird, sondern der Messerblock aktiv bewegt wird. Wichtig ist jeweils nur die relative Bewegung des Kabels 10 in Bezug auf den Messerblock bzw. in Bezug auf die Abisoliermesser 42, 44 bzw. die Walzen 60, 62.

Querbewegungen der Walzen 60, 62 zum Ausrichten der Innenleiter 30, 31 erfolgen typischerweise nicht. Die Walzen 60, 62 werden nur aufeinander zu bewegt, um den Druck auf den ersten Teilbereich 14 des Kabels 10 zu erhöhen, oder voneinander weg bewegt, um den Druck auf den ersten Teilbereich 12 des Kabels 10 zu verringern.

Die Walzen 60, 62 werden nicht gegeneinander bzw. nicht in zueinander parallel versetzten Richtungen verschoben. Die Walzen 60, 62 werden aufeinander zu bewegt und somit wird das Kabel 10 zwischen den Walzen 60, 62 geklemmt bzw. gepresst. Die Walzen 60, 62 werden nicht seitlich relativ zu dem Kabel 10 bewegt, um die Innenleiter 30, 31 aktiv zu entdrillen. Somit kann es nicht passieren, dass die Walzen 60, 62 die Innenleiter 30, 31 in eine Richtung drücken bzw. zu entdrillen versuchen, die der Drillrichtung der Innenleiter 30, 31 entspricht, wodurch die Innenleiter 30, 31 weiter aufgedrillt statt entdrillt werden, was zu Beschädigungen und/oder Deformierungen der Innenleiter 30, 31 führen kann. Durch die Bewegung der Walzen 60, 62 aufeinander zu, werden die Innenleiter 30, 31 ohne Beschädigung oder Deformierung der Innenleiter 30, 31 unabhängig von der Drillrichtung der Innenleiter 30, 31 entdrillt und in einer Ebene angeordnet.

Die Kraft, die von der Abisolierungsvorrichtung 5 auf die Innenleiter 30, 31 wirkt, wirkt sozusagen von oben und unten und in zueinander genau entgegengesetzten Richtungen auf die Innenleiter 30, 31. Die drehbaren Walzen 60, 62 bzw. drehbaren Rollen drücken aufeinander zu und sorgen auf diese Weise für eine Entdrillung der Innenleiter 30, 31 und eine Anordnung der Innenleiter 30, 31 in einer Ebene.

Die Ebene verläuft zwischen den beiden Walzen 60, 62 und parallel zu den Drehachsen der Walzen 60, 62. In Zeichnungen verläuft die Ebene, in der die Innenleiter 30, 31 angeordnet werden soll bzw. angeordnet werden, bevor die Isolierung der Innenleiter 30, 31 eingeschnitten und entfernt wird, jeweils horizontal.

Die Abisolierungsvorrichtung 5 wird auch als Cut-&Strip-Vorrichtung bezeichnet.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 5: Abisolierungsvorrichtung
- 7: Bewegungsvorrichtung
- 10: Kabel
- 12: erster Teilbereich
- 14: zweiter Teilbereich
- 20: Kabelmantel
- 30, 31: Innenleiter
- 35, 36: Litzen
- 38: Isolierung
- 40: Messerkopf
- 42, 44: Abisoliermesser
- 46, 48: Trennmesser
- 50, 52: Druckfeder
- 60: erste Walze
- 62: zweite Walze

## Patentansprüche

1. Verfahren zum Entfernen einer Isolierung (38) von Innenleitern (30, 31) eines Kabels (10) mittels einer Abisolierungsvorrichtung (5), wobei das Verfahren folgende Schritte umfasst:
Bereitstellen des Kabels (10) mit mehreren Innenleitern (30, 31), wobei in einem ersten Teilbereich (12) des Kabels (10) der Kabelmantel (20) entfernt ist und in einem zweiten Teilbereich (14) des Kabels (10) der Kabelmantel (20) nicht entfernt ist;
Einführen des ersten Teilbereichs (12) des Kabels (10) zwischen eine erste drehbare Walze (60) und eine zweite drehbare Walze (62) der Abisolierungsvorrichtung (5);
Bewegen der ersten Walze (60) und/oder der zweiten Walze (62) derart, dass sich die erste Walze (60) und die zweite Walze (62) zum Einklemmen des ersten Teilbereichs (12) des Kabels (10) zwischen den Walzen (60, 62) aufeinander zu bewegen;
Bewegen des Kabels (10) in eine erste Richtung derart, dass sich der zweite Teilbereich (14) des Kabels (10) von den Walzen (60, 62) entfernt, während der erste Teilbereich (12) zwischen den Walzen (60, 62) eingeklemmt ist;
Bewegen des Kabels (10) in eine zweite Richtung derart, dass der zweite Teilbereich (14) des Kabels (10) den Walzen (60, 62) angenähert wird, wobei die erste Richtung entgegensetzt zur zweiten Richtung verläuft, während der erste Teilbereich (12) zwischen den Walzen (60, 62) eingeklemmt ist;
Bewegen von Abisoliermessern (42, 44) auf den ersten Teilbereich (12) des Kabels (10) derart zu, dass die Abisoliermesser (42, 44) in die Isolierung (38) der Innenleiter (30, 31) einschneiden; und
Bewegen des Kabels (10) in die erste Richtung zum Entfernen zumindest eines Teils der Isolierung (38) von den Innenleitern (30, 31).

2. Verfahren nach Anspruch 1, wobei
der Druck der Walzen (60, 62) auf den ersten Teilbereich (12) des Kabels (10) erhöht wird, nachdem das Kabel (10) in die erste Richtung bewegt wurde und bevor das Kabel (10) in die zweite Richtung bewegt wird.

3. Verfahren nach Anspruch 1 oder 2, wobei
die Abisoliermesser (42, 44) und Trennmesser (46, 48) zum Abtrennen des Kabels (10) Teile eines Messerkopfes (40) sind, wobei das Verfahren ferner folgenden Schritt umfasst:
Verfahren des Messerkopfes (40) in eine Richtung senkrecht zu der ersten Richtung zum Anordnen des ersten Teilbereichs (12) des Kabels (10) zwischen den Abisoliermessern (42, 44).

4. Verfahren nach einem der vorhergehenden Ansprüche, wobei
während des Einklemmens des ersten Teilbereichs (12) des Kabels (10) zwischen den Walzen (60, 62) die Walzen (60, 62) jeweils nur entlang einer Bewegungsrichtung bewegt werden, wobei die beiden Bewegungsrichtungen der Walzen (60, 62) genau entgegengesetzt zueinander sind.

5. Verfahren nach einem der vorhergehenden Ansprüche, wobei
der Druck der Walzen (60, 62) auf den ersten Teilbereich (12) des Kabels (10) während des Einklemmens von dem Abstand der beiden Walzen (60, 62) zueinander abhängt.

6. Verfahren nach einem der Ansprüche 1-4, wobei
der Druck, mit dem die Walzen (60, 62) den ersten Teilbereich (12) einklemmen, unabhängig von dem Abstand der Walzen (60, 62), insbesondere pneumatisch, eingestellt wird.

7. Verfahren nach einem der vorhergehenden Ansprüche, wobei
das Kabel (10) mehrmals abwechselnd in die erste Richtung und die zweite Richtung bewegt wird, während der erste Teilbereich (12) zwischen den Walzen (60, 62) eingeklemmt ist.

8. Verfahren nach einem der vorhergehenden Ansprüche, wobei
das Kabel (10) solange abwechselnd in die erste Richtung und die zweite Richtung bewegt wird, bis die Innenleiter (30, 31) des Kabels (10) in einer Ebene angeordnet sind.

9. Abisolierungsvorrichtung (5) zum Entfernen einer Isolierung (38) von Innenleitern (30, 31) eines Kabels (10), wobei in einem ersten Teilbereich (12) des Kabels (10) der Kabelmantel (20) des Kabels (10) entfernt ist und in einem zweiten Teilbereich (14) des Kabels (10) der Kabelmantel (20) des Kabels (10) nicht entfernt ist,
wobei die Abisolierungsvorrichtung (5) folgendes umfasst:
eine erste drehbare Walze (60) und eine zweite drehbare Walze (62), wobei die Walzen (60, 62) zum Einklemmen des ersten Teilbereichs (12) des Kabels (10) zwischen der ersten Walze (60) und der zweiten Walze (62) ausgebildet sind,
eine Bewegungsvorrichtung (7) zum Bewegen des Kabels (10) in eine erste Richtung und in eine der ersten Richtung entgegengesetzte zweite Richtung,
während der erste Teilbereich (12) zwischen den Walzen (60, 62) eingeklemmt ist, wobei bei der Bewegung des Kabels (10) in die erste Richtung sich der zweite Teilbereich (14) des Kabels (10) von den Walzen (60, 62) entfernt und bei der Bewegung des Kabels (10) in die zweite Richtung der zweite Teilbereich (14) des Kabels (10) den Walzen (60, 62) angenähert wird, und
Abisoliermesser (42, 44) zum Entfernen der Isolierung (38) der Innenleiter (30, 31) des Kabels (10), wobei die Abisoliermesser (42, 44) derart ausgebildet und anordenbar sind, dass die Abisoliermesser (42, 44) in die Isolierung (38) der Innenleiter (30, 31) einschneiden und die Isolierung (38) beim Bewegen des Kabels (10) in die erste Richtung von den Innenleitern (30, 31) entfernt wird.

10. Abisolierungsvorrichtung (5) nach Anspruch 9, ferner umfassend
einen Messerkopf (40), wobei der Messerkopf (40) die Abisoliermesser (42, 44) und Trennmesser (46, 48) aufweist,
wobei der Messerkopf (40) in eine Richtung senkrecht zu der ersten Richtung derart verfahrbar ist, dass der erste Teilbereich (12) des Kabels (10) zwischen die Abisoliermesser (42, 44) gelangt.

11. Abisolierungsvorrichtung (5) nach Anspruch 9 oder 10, wobei
die Abisolierungsvorrichtung (5) derart ausgebildet ist, dass während des Einklemmens des ersten Teilbereichs (12) des Kabels (10) zwischen den Walzen (60, 62) die Walzen (60, 62) jeweils nur entlang einer Bewegungsrichtung bewegbar sind, wobei die beiden Bewegungsrichtungen der Walzen (60, 62) genau entgegengesetzt zueinander sind.

12. Abisolierungsvorrichtung (5) einem der Ansprüche 9-11, wobei
die Abisolierungsvorrichtung (5) derart ausgebildet ist, dass der Druck der Walzen (60, 62) auf den ersten Teilbereich (12) des Kabels (10) erhöht werden kann, während der erste Teilbereich (12) des Kabels (10) zwischen den Walzen (60, 62) eingeklemmt ist,
wobei der Druck, mit dem die Walzen (60, 62) den ersten Teilbereich (12) einklemmen, abhängig von dem Abstand der Walzen (60, 62) ist.

13. Abisolierungsvorrichtung (5) nach einem der Ansprüche 9-11, wobei
die Abisolierungsvorrichtung (5) derart ausgebildet ist, dass der Druck der Walzen (60, 62) auf den ersten Teilbereich (12) des Kabels (10), insbesondere pneumatisch, erhöht werden kann, während der erste Teilbereich (12) des Kabels (10) zwischen den Walzen (60, 62) eingeklemmt ist, ohne den Abstand der Walzen (60, 62) zueinander wesentlich zu ändern.

14. Abisolierungsvorrichtung (5) nach einem der Ansprüche 9-13, wobei
die Abisolierungsvorrichtung (5) derart ausgebildet ist, dass das Kabel (10) mehrmals abwechselnd in die erste Richtung und die zweite Richtung bewegbar ist, während der erste Teilbereich (12) zwischen den Walzen (60, 62) eingeklemmt ist.

15. Abisolierungsvorrichtung (5) nach einem der Ansprüche 9-14, wobei
die Abisolierungsvorrichtung (5) derartig ausgebildet ist, dass das Kabel (10) solange abwechselnd in die erste Richtung und die zweite Richtung bewegbar ist, bis die Innenleiter (30, 31) des Kabels (10) in einer Ebene angeordnet sind.
